## Europäisches Patentamt

## European Patent Office

## Office européen des brevets

(19)

(11) Publication number: **0 249 433**
**B1**

(12) **EUROPEAN PATENT SPECIFICATION**

(45) Date of publication of the patent specification:
**07.11.90**

(51) Int. Cl.⁵: **C02F 3/08**

(21) Application number: **87305063.7**

(22) Date of filing: **09.06.87**

(54) **Improvements in rotating biological contactors, and a method for their manufacture.**

(30) Priority: **10.06.86 IE 1539/86**

(43) Date of publication of application:
**16.12.87 Bulletin 87/51**

(45) Publication of the grant of the patent:
**07.11.90 Bulletin 90/45**

(84) Designated Contracting States:
**DE ES FR GB GR IT**

(56) References cited:
**DE-A- 3 409 111**
**US-A- 4 157 303**
**US-A- 4 160 736**

(73) Proprietor: **Butler, James Patrick Joseph,**
**44 Templemichael Glebe, Longford(IE)**

(72) Inventor: **Butler, James Patrick Joseph,**
**44 Templemichael Glebe, Longford(IE)**

(74) Representative: **Gura, Henry Alan et al, MEWBURN**
**ELLIS & CO. 2/3 Cursitor Street, London EC4A 1BQ(GB)**

## Description

The present invention relates to improvements in rotating biological contactors, and to methods for their manufacture.

Rotating biological contactors are used in the treatment of raw sewage effluent, by agitation and aeration to render it safe for discharge into natural waterways. The surfaces of the rotating contactor media when brought into continuous contact with raw sewage effluent and air develop a microbiological growth. This growth, in turn, feeds upon the nutrients in the effluent so as to accelerate the lowering of its biochemical oxygen demand (BOD) by means of the natural process of aerobic respiration.

To conform with generally accepted discharge standards, e.g. the U.K. Royal Commission Standard, BOD should not exceed 20 mg./l. with a suspended solids content of less than 30 p.p.m. Domestic sewage effluent has an average BOD concentration of 200-250 mg./l., but a rotating biological contactor treatment system is capable of reducing the BOD concentration to safe levels for discharge without the addition of chemicals. The suspended solids content is reduced by means of conventional settlement and clarification tanks. The system disclosed herein is ideally suited to smaller treatment plants not connected with a mains sewage treatment system, for example, having a capacity expressed as 70-300 Persons Equivalent (one Person Equivalent, or PE = 55g./BOD/Day).

Hitherto, rotating biological contactors have been constructed in very many different ways but essentially comprise an open rotor structure of semi-buoyant lightweight material which is rotatable on a shaft and which is partly submerged in the effluent to be treated. The rotor includes or defines a structure having a high surface area providing a suitable substrate for biomass growth, such as a series of discs which may be embossed (e.g. GB 2,118,535A), or divided into sectors (e.g. GB 1,394,552), a drum defined by an open mesh enclosing loose particulate media (e.g. GB 1,408,235), or sheets or tubes wound in a spiral or helical fashion about the shaft (e.g. GB 1,509,712, EPO 0,198,451A). It has also been proposed (e.g. WO 81/00101) to use a spiral or helical rotor structure to provide nett lift to the effluent during rotation in the manner of an Archimedes Screw.

Rotating biological contactors have also been constructed by cutting thin flexible sheet material such as glass reinforced plastics (G.R.P.) into strips and placing the strips edgewise onto a static base template defining a spiral pattern of individual vanes emanating from a central axis. The base template is made of light steel defining raised or upstanding vanes, on which the G.R.P. vanes are manually wound, pressing against one side of the template vanes. A flat disc of the same G.R.P. material defines a rotor "blank" which is coated with resin on one side. While the resin is still wet, the sheet is placed on top of the upstanding edges of the vanes held on the template and allowed to adhere thereto by placing weights on top of the disc. This method is time-consuming and has other drawbacks in that excess resin can drip down onto the base template and cause difficulty in removing the template when the vanes have adhered to the rotor. Also, because the resin tends to run away from the sheet under gravity, bonding is not always continuous along the edge surfaces of the vanes. The curing temperature is critical since the adhesive must be tacky enough to produce bonding, and to resist flow. One of the aims of the present invention is to overcome these problems by providing an improved method of manufacturing rotating biological contactors from thin flexible sheet material such as glass reinforced plastics.

It is also an aim of the invention to improve the design and efficiency of known rotating biological contactors including a disc and spiral vane rotor construction such as those disclosed in Danish Patent Applications Nos. 2002/83 and 0089/84.

DK 2002/83 discloses a drum structure having two sets of spiral vanes wound in opposite directions and divided by a single axially mounted disc which defines a partition. The inlets and outlets are located at opposite ends of the drum near the shaft and not at the periphery of the drum end faces. A lifting and lowering effect is obtained by the oppositely wound spiral vanes in this arrangement to pass effluent through the contactor. A certain minimum quantity of effluent is present in the drum at any given time to make the drum more buoyant and so reduce the load on the shaft.

DK 0089/84 discloses a non-partitioned drum having a spiral vane construction which has inlets near the periphery of the drum.

DE 3 409 111 A describes a contactor having a series of discs which sandwich between them spiral vanes but wherein no enclosing shell or drum structure is provided. It is necessary to almost submerge the contactor in this instance which increases the load on the shaft.

US 4 160 736 describes a drum structure having closely-spaced discs mounted on a shaft with a spiral vane arrangement at each end of the drum having the function of carrying effluent towards inlets and outlets which are located in the axial region at the respective end faces of the drum. A relatively small quantity of effluent is held in the drum at any given time, which acts as a "rotating trickling filter" and does not provide the same positive aeration by virtue of a churning action as provided by a contactor having an enclosed spiral vane arrangement.

One of the problems encountered with many of the known contactor constructions is that in spite of recirculation of effluent from an adjacent settlement tank to the biozone tank containing the rotating biological contactors, not all the effluent comes into contact with the growth on the contactor vanes.

Also, the raising and lowering effect achieved by prior art spiral vane constructions is not generally efficient. While it is desirable to ensure that effluent passes relatively slowly through the drum, it is also highly desirable to maintain a consistent churning and flushing of effluent inside the drum to promote active and positive mixing of air and effluent.

The rotating biological contactor of the present invention seeks to minimise or eliminate effluent by-pass by increasing the contactor surface area available for biomass growth per linear metre of shaft, and by enclosing the space surrounding the rotor vanes in a novel drum structure having a nett lift effect, and by recirculating treated effluent by a simple gravity feed mechanism.

Accordingly, the present invention provides a rotating biological contactor for sewage effluent treatment comprising a semi-buoyant rotor structure mounted on a shaft supporting a plurality of coaxially-mounted discs each sandwiching therebetween a series of closely-spaced spiral vanes available as a biomass growth substrate, characterised in that the rotor structure is enclosed within a drum including means allowing communication of effluent to be treated for distribution between adjacent sandwiches at the outer periphery of the discs from effluent inlets defined by holes in one end surface of the drum located adjacent to the circumference of the drum, such that during rotation of the drum, the spiral vanes allow a nett lift of effluent to be treated from a first effluent holding tank in which the drum is partly submergable via duct means in the axial region of the rotor structure communicating between adjacent sandwiches leading to an effluent outlet defined in a second end surface of the drum, and discharging to an adjacent holding tank from where treated effluent may be recirculated by means of gravity feed back through the first effluent holding tank.

The outer curved surface of the drum is preferably provided with means to aerate the effluent to be treated, most preferably a series of open-ended transverse or diagonal corrugations (5 or 5a).

The surface available as a biomass growth substrate is defined as 200 to 300m² , most preferably 250m² , per linear metre of shaft given a rotor diameter of about 1.5 metres.

The invention also provides a method of manufacturing a rotor for a rotating biological contactor in thin flexible sheet material, wherein strips of the material are placed edgewise onto a base template (34) to define a spiral pattern of individual vanes (10) emanating from a central hub region (38) which are then adhered to a circular disc (9) of the same material, characterised by clamping the template (34) with the vanes (10) against the disc (9) with a coating of curable adhesive therebetween, supporting the clamped assembly in a jig (30), rotating the clamped assembly if necessary so as to ensure that the vanes face upwards but maintaining the template substantially horizontal, and releasing the finished rotor construction from the jig when curing of the adhesive is complete.

The template (34) preferably defines a pattern of spiral grooves (37) adapted to receive and support the vanes (10) during manufacture of the rotor construction.

The discs (9) and vanes (10) are preferably made of thin glass-reinforced plastics material.

The rotating biological contactor of the present invention, on account of its spiral vane rotor construction is essentially a mechanical pump in which a nett lift of effluent can occur, to a height which does not exceed the radius of the rotor, as the rotor rotates in a semi-submerged condition. This, together with the enclosed and intercommunicating spiral vane sandwich structure has the effect of maximising contact between the effluent to be treated and the biomass growth on the vanes, and substantially all the effluent is pumped through the contactor, and is readily recirculated therethrough, thus avoiding by-pass of untreated effluent through the system. A certain amount of by-pass occurs in unenclosed disc systems, or systems using baffles or a series of parallel discs which do not provide a genuine pumping action. Furthermore the pumping action afforded by the rotating biological contactor of the present invention is such that the biomass growth area is constantly scoured, shearing off any loose growth and keeping the growth layer thin and active. Known disc systems have a problem of biomass bridging which reduces the available surface area and also renders the biomass less active.

While air and effluent are actively intermixed as the effluent to be treated is pumped around the spiral passageways between the vanes, additional oxygen can be supplied directly to the effluent in the treatment tank in which the rotating biological contactor is suspended, by aerators on the outer surface of the drum. Aerators formed by transverse or diagonal corrugations entrap air as they are submerged during rotation of the drum and release the entrapped air in the effluent before re-emerging. This speeds up the process of aerobic respiration and allows a smaller surface area for biomass growth to be required per P.E. (as defined above).

The comparatively dense packing together of the spiral vanes gives a surface area available for biomass growth considerably greater than prior art constructions. The sandwich construction also allows the said surface area to be conveniently increased by adding additional sandwiches thereby increasing the length of the rotor.

The method of manufacturing a rotor for a rotating biological contactor according to the invention ensures that excess adhesive remains at the bonding sites along the edges of the vanes and cannot flow under gravity in the direction of the template, thus ensuring clean removal of the finished rotor construction when the adhesive has cured and hardened.

The clamping and supportive action of the template is enhanced by the provision of a pattern of spiral grooves adapted to receive the vanes. Thus, the weight of the template does not bear directly on the edges of the vanes causing bending or distortion but rather supports and grips the vanes by their sides during clamping.

Glass reinforced plastics material lends itself to strong thin sheet formation of about 5 mm thickness, which is flexible when cut into strips and can easily be formed into spirals without stressing or cracking. It is also inert, is unaffected by biological waste effluents, and requires no special surface treatment to render it suitable as a biomass growth substrate.

A preferred embodiment of a rotating biological contactor, and a method for its manufacture will now be described with reference to the accompanying drawings, in which:

Figure 1 is a side elevation of a rotor for a rotating biological contactor,

Figure 2 is an end elevation of the rotor shown in Figure 1,

Figure 3 is a side elevation, as in Figure 1, with the outer drum covering removed,

Figure 4 is an end elevation, as in Figure 2, with the outer drum covering removed,

Figure 5 is a perspective view with a partial cutaway section of a sewage treatment plant in which a rotating biological contactor in accordance with the invention has been installed,

Figure 6 is a front elevation of a reversing jig for use in a method of manufacturing a rotating biological contactor in accordance with the present invention with a circular template shown in a vertical position, and

Figure 7 shows the reversing jig with the template in a horizontal position, and a rotor "blank" and vanes clamped thereto.

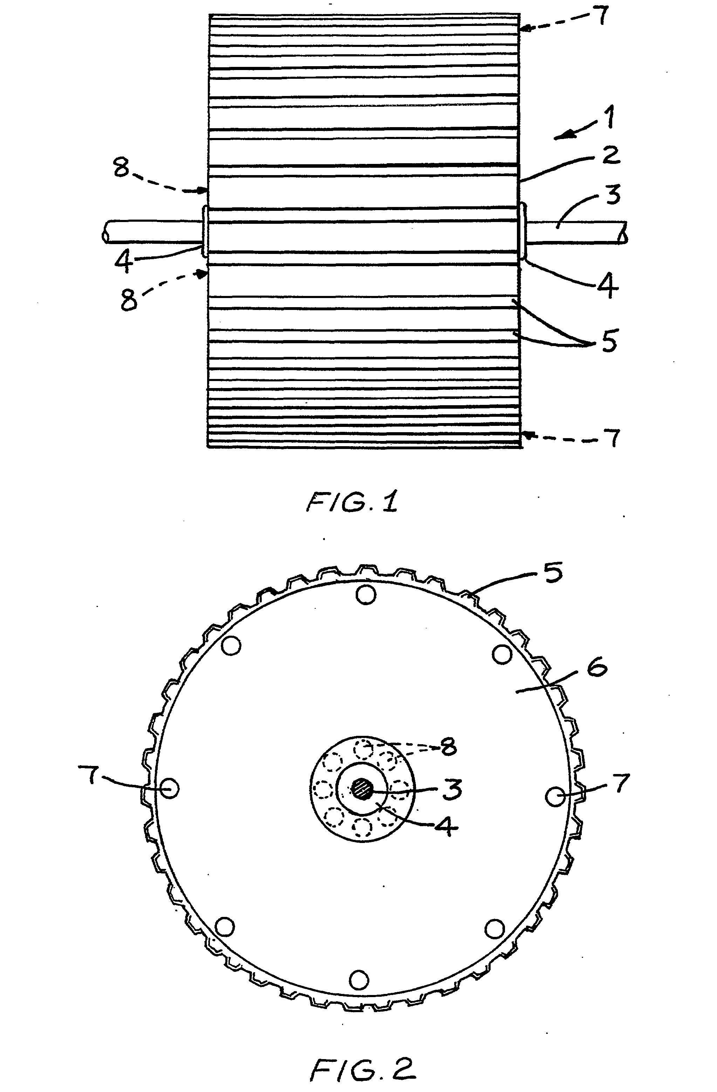

Referring to Figures 1 to 4 of the drawings, a rotor 1 for a rotating biological contactor comprises a drum 2 made of glass-reinforced plastics material mounted on a shaft 3 made of mild steel by means of hub mountings 4. The drum 2 consists of an outer shell comprising a curved surface with raised and open-ended transverse corrugations 5, with two circular end faces 6. The end faces 6 are perforated with regularly-spaced inlet holes 7 near their circumference, and outlet holes 8 adjacent to the shaft 3.

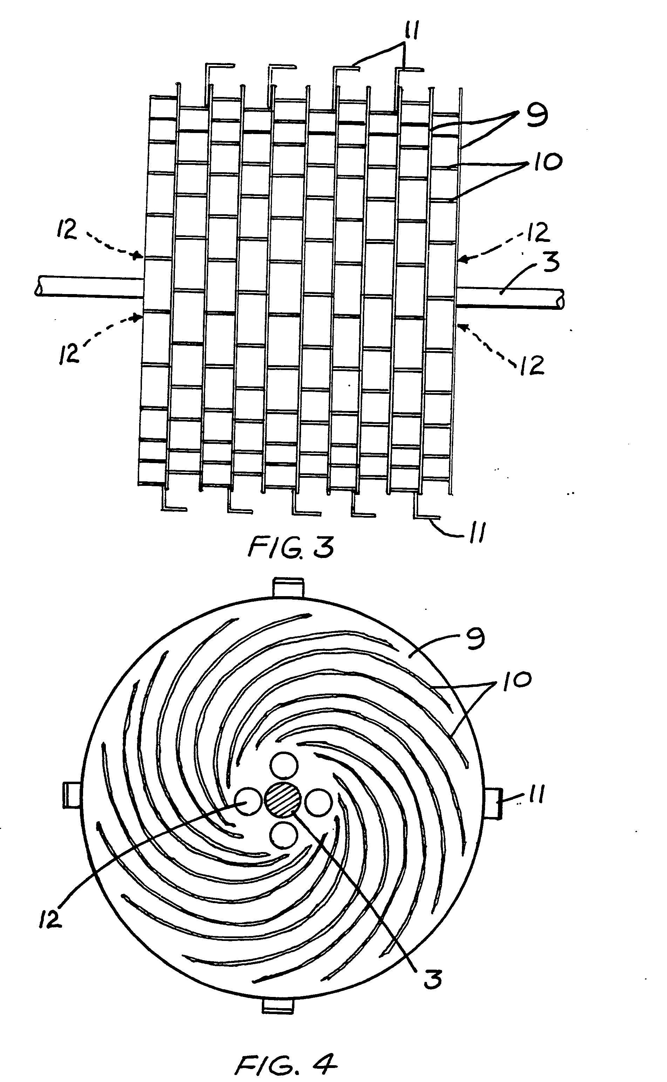

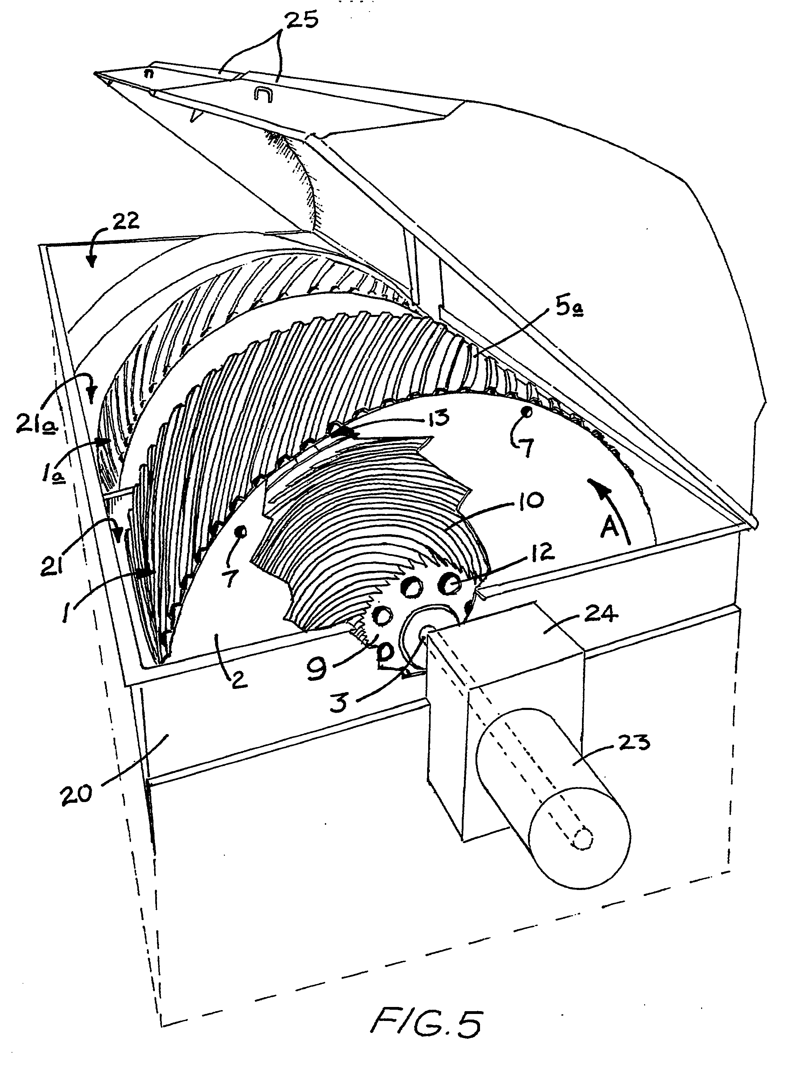

Figures 3 and 4 illustrate the internal structure of the rotor 1 which consists of a series of closely-packed discs 9 each having adhered thereto a series of vanes 10 arranged in a spiral pattern about the shaft 3. The discs 9 are fixed to the internal curved surface of the drum by means of tabs 11. The discs 9 are of slightly smaller diameter than the end faces 6, leaving a passageway 13 (see Figure 5) along the length of the drum leading from inlet holes 7 adjacent to the internal curved surface of the drum. The tabs 11 on successive discs are preferably staggered to produce a baffle effect in passageway 13. Each disc 9 has a number of holes 12 between the shaft 3 and the innermost ends of the spiral vanes 10.

Figure 5 illustrates a sewage effluent treatment plant including a rotating biological contactor having two rotors 1 and 1a in accordance with the invention. The plant comprises a tank 20 divided into biozone compartments 21,21a, in which the rotors 1 and 1a respectively are partly submerged, and a settlement and clarification compartment 22. The tank 20 may be partly buried below ground. An electric motor 23 such as a single or three-phase motor [e.g. a S.E.W. Eurodrive R.(Trade Mark) motor] with a helical gear unit 24 may be provided to drive the shaft 3 and rotors 1 in the direction indicated by arrow A.

In operation, as the rotors 1,1a, rotate, e.g. at a speed of about six revolutions per minute, effluent enters the inlet holes 7 of rotor 1 and through passageway 13. The effluent is then picked up by the vanes 10 in the manner of the classical Archimedes Screw principle, thereby lifting the effluent gradually along the surfaces of the vanes 10 until it reaches the shaft 3, whereupon it gradually finds its way through holes 12 by spilling over from one disc and vane sandwich to the next until it reaches the outlet holes 8. Thus, there is a nett lift of effluent on account of the intrinsic pumping action of the rotor approximately equal to the radius of the rotor. Effluent treated by rotor 1 emitting from outlet holes 8 is passed directly to adjacent axially-disposed inlet holes (not shown) in rotor 1a, which therefore does not necessarily require circumferentially-disposed inlet holes 7 as in rotor 1. Due to the nett lift effect, a head or difference in levels will develop between the two biozone compartments 21 and 21a in which the respective rotors 1, 1a are suspended. Thus, by means of simple gravity feed, effluent treated by rotor 1a may be recirculated via settlement tank 22 back to biozone compartment 21 for a further pass through the system.

A biomass growth develops on the surfaces of the vanes 10 and discs 9 inside the drum 2. The surface area available for biomass growth is typically 250 m² per linear metre of shaft given a rotor diameter of 1.6 metres. The available surface area may also be expressed empirically as 100L m², where L equals the vane length in metres. The vanes 10 are closely spaced as shown in Figure 5, and it will be appreciated that the other Figures omit many of the vanes 10 for clarity. The biochemical oxygen demand (BOD) of the effluent is reduced by the natural process of aerobic respiration, in a known manner. Oxygen is introduced to the effluent by a process of "active aeration" inside the rotor drum. As the rotors 1,1a, rotate, air enters the inlet holes 7 when the rotors are not submerged, which air is then entrapped inside the rotor drum structure for a period of time and agitated together with effluent which has entered the rotor drum during submersion, in a repeated churning action. This contrasts with known open disc or drum structures which only afford "passive aeration" as there is no truly effective mechanical mixing of air and effluent. The effluent in the biozone compartments 21,21a, is also aerated directly by means of aerators formed by open ended diagonally-disposed corrugations 5a on the outer curved surface of the drum 2.

The inherent nett lift effect porvided by the rotors has several practical advantages, for example:

(a) It allows recirculation of effluent through the treatment system without the use of a separate pump, thereby increasing the number of passes.

(b) It provides a feed of recirculated effluent for a limited period of time at times of low inflow of untreated effluent,

(c) Conversely, it provides a buffer against bypassing of surge flows or at times of high inflow of untreated effluent, and

(d) It allows treated effluent to be discharged at a higher level than the inflow level, which may be of considerable convenience at certain sites.

The type of plant illustrated in Figure 5 may be installed at sites where there is no ready access to a mains sewage disposal system, and has the typical capacity of 40 to 300 P.E. It has the advantage that it can be installed as a unit or added on to an existing septic tank. Hoods 25 may be employed to cover in the tank 20, and in operation the plant produces no noticeable odour and very little noise, so that it may be situated relatively near buildings. It is economical; for example, a typical 300 PE plant will consume about 9 KW/hr. per day. Apart from periodic desludging and bearing inspection, the plant requires very little maintenance. During rotation, air entrapped inside the rotor drum makes the rotor semi-buoyant even when the biozone tank is full. This has the effect of minimising the shaft load and thus extending its life. Shaft failure is a common fault with open disc systems.

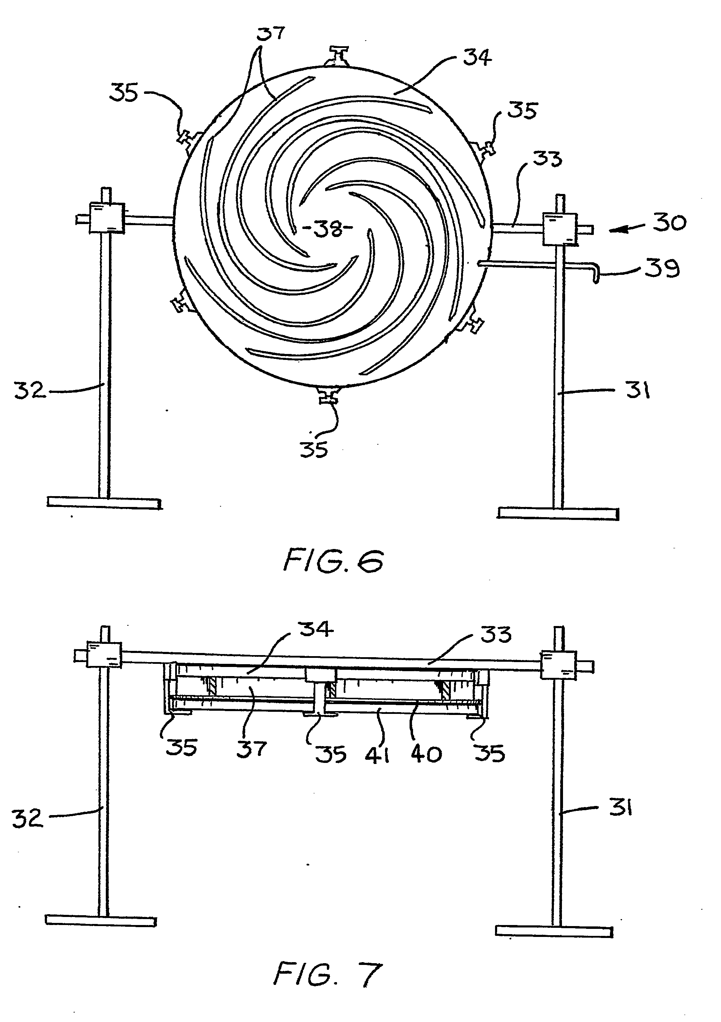

A method of manufacturing a rotor for a rotating biological contactor in glass-reinforced plastics material will now be described with reference to Figures 6 and 7 of the drawings. Firstly, raw chopped strand glass fibre in the form of a mat is rolled out on a suitable workbench. The mat is coated with a resin such as STYPOL (Trade Mark) polystyrene resin including an air-curable catalyst. When cured, the semi-rigid sheet is cut into a stock of elongate strips using a bench saw. A suitable stock of rotor disc "blanks" is made in a similar manner.

During manufacture, a reversing jig 30 is employed, as shown in detail in Figure 6 and 7. The jig 30 comprises a stand having two legs 31,32 supporting a central axle 33. The axle 33 in turn supports a circular wooden template 34 fitted with six clamps 35 distributed at equally-spaced intervals about its circumference. The template has a pattern of spiral locating grooves 37 cut therethrough, emanating from a central hub region 38. The template can be revolved about the stand on the axle through an angle of 360° if desired, but may be locked in a substantially horizontal position by means of a locking pin 39. The template 30 may also be removed from the stand and placed on a workbench.

The method of manufacture in accordance with the invention consists of the following steps:

(a) the strips of sheet material are placed on the template in a spiral pattern in the locating grooves 37,

(b) a flat circular rotor "blank" sheet 40 is coated with resin on one side,

(c) the sheet 40 is then laid down on top of the upstanding edges of the vanes 37, a base plate 41 is placed on top of the sheet 40 and the assembly is then clamped in place by means of clamps 35,

(d) the whole template is revolved through an angle of 180° to turn the resin-coated side of the sheet 40 to face upwards but maintaining the template substantially horizontal, and

(e) when curing of the resin is complete, the clamps 35 are released thus allowing removal of the finished rotor assembly from the jig.

It will readily be appreciated that any excess resin remains at the bonding sites along the edges of the vanes and cannot flow under gravity in the direction of the template, thus ensuring clean removal of the assembled rotor when the resin has cured and hardened. It is not necessary to maintain any precise control over the temperature and viscosity of the adhesive during curing. The bond between the vanes and the rotor disc is also enhanced by the clamping action and the inherent weight of the vanes bearing down onto the rotor during bonding. A further advantage is that any excess resin which collects at the base of each vane forms a small "fillet" along the vane thus improving the bond with the rotor disc.

The thickness of the vanes and the discs is in the order of 5 mm and the height of the vanes is approximately 90 mm. The rotor discs which have been assembled by a method of manufacture as described above may be sandwiched together to form the structure illustrated and described above with reference to Figures 1 to 4, to form a rotor for a rotating biological contactor.

**Claims**

1. A rotating biological contactor for sewage effluent treatment comprising a semi-buoyant rotor structure (1) mounted on a shaft (3) supporting a plurality of coaxially-mounted discs (9) each sandwiching therebetween a series of closely-spaced spiral vanes (10) available as a biomass growth substrate, characterised in that the rotor structure is enclosed within a drum (2) including means (13) allowing communication of effluent to be treated for distribution between adjacent sandwiches at the outer periphery of the discs (9) from effluent inlets (7) defined by holes in one end surface of the drum located adjacent to the circumference of the drum, such that during rotation of the drum, the spiral vanes allow a nett lift of effluent to be treated from a first effluent holding tank in which the drum is partly submergable via duct means (12) in the axial region of the rotor structure communicating between adjacent sandwiches leading to an effluent outlet (8) defined in a second end surface of the drum, and discharging to an adjacent holding tank from where treated effluent may be recirculated by means of gravity feed back through the first effluent holding tank.

2. A rotating biological contactor as claimed in Claim 1 in which the outer curved surface of the drum is provided with means to aerate the effluent to be treated.

3. A rotating biological contactor as claimed in Claim 2 in which outer surface aerator means comprise a series of open-ended transverse or diagonal corrugations (5 or 5a).

4. A rotating biological contactor as claimed in any one of Claims 1 to 3 in which the surface area available as a biomass growth substrate is defined as 100L m² where L equals the vane length in metres.

5. A method of manufacturing a rotating biological contactor as claimed in any of Claims 1 to 4, having a rotor structure made in thin flexible sheet material, wherein strips of the material are placed edgewise onto a base template (34) to define a spiral pattern of individual vanes (10) emanating from a central hub region (38) which are then adhered to a circular disc (9) of the same material, comprising clamping the template (34) with the vanes (10) against the disc (9) with a coating of curable adhesive therebetween, supporting the clamped assembly in a jig (30), rotating the clamped assembly if necessary so as to ensure that the vanes face upwards but maintaining the template substantially horizontal, releasing the finished vane and disc construction from the jig when curing of the adhesive is complete, sandwiching a plurality of said vane and disc constructions together with curable adhesive in a similar manner and mounting the thus formed sandwich structure inside a drum on a rotor shaft.

6. A method as claimed in Claim 5 in which the template (30) defines a pattern of spiral grooves (37) adapted to receive and support the vanes (10) during manufacture of the rotor construction.

7. A method as claimed in Claim 5 in which the discs (9), vanes (10) and drum (2) are made of thin glass-reinforced plastics material.

## Revendications

1. Contacteur biologique rotatif pour le traitement des eaux usées comprenant une structure de rotor semi-flottante (1) montée sur un arbre (3) supportant une pluralité de disques montés coaxialement (9) prenant chacun en sandwich une série de pales en spirale étroitement espacées (10) servant de support de culture de biomasse, caractérisé en ce que la structure de rotor est enfermée dans un tambour (2) comprenant un moyen (13) permettant la communication des eaux usées à traiter pour une distribution entre les sandwichs adjacents à la périphérie extérieure des disques (9) à partir des entrées des eaux usées (7) formées par des trous dans une surface d'extrémité du tambour situés adjacents à la circonférence du tambour, de sorte que durant la rotation du tambour, les pales en spirale permettent un surplus de portance des eaux usées à traiter à partir d'une première cuve contenant les eaux usées dans laquelle le tambour peut être en partie immergé via le conduit (12) dans la région axiale de la structure de rotor communiquant entre les sandwichs adjacents menant à une sortie des eaux usées (8) formée dans une seconde surface d'extrémité du tambour, et se déchargeant dans une cuve adjacente à partir de laquelle les eaux usées traitées peuvent être remises en circulation par retour par gravité dans la première cuve d'eaux usées.

2. Contacteur biologique rotatif selon la revendication 1 dans lequel la surface courbe externe du tambour est dotée de moyens pour aérer les eaux usées à traiter.

3. Contacteur biologique rotatif selon la revendication 2 dans lequel les aérateurs à surface externe comprennent une série de cannelures transversales ou diagonales ouvertes aux extrémités (5 on 5a).

4. Contacteur biologique rotatif selon l'une quelconque des revendications 1 à 3 dans lequel la zone de surface disponible en tant que support de culture de biomasse est calculée à 100L m² où L est égal à la longueur des pales en mètres.

5. Procédé de fabrication d'un contacteur biologique rotatif selon l'une quelconque des revendications 1 à 4, comportant une structure de rotor faite en mince matériau en feuille flexible, dans lequel des bandes du matériau sont placées de chant sur un gabarit de base (34) afin de former un ensemble en spirale de pales individuelles (10) se projetant à partir d'une région de moyeu central (38) qui sont ensuite collées à un disque circulaire (9) du même matériau, comprenant les opérations consistant à serrer le gabarit (34) avec les pales (10) contre le disque (9) avec un revêtement d'adhésif durcissable entre les deux, à supporter l'ensemble serré dans une monture (30), à faire tourner l'ensemble serré si nécessaire afin de garantir que les pales donnent sur le haut mais à garder le gabarit substantiellement horizontal, et à libérer la construction pales-disque finie de la monture lorsque le durcissement de l'adhésif est achevé, à arranger en sandwich une pluralité desdites constructions pales-disque avec l'adhésif durcissable d'une manière similaire et à monter la structure en sandwich ainsi formée dans un tambour sur un arbre de rotor.

6. Procédé selon la revendication 5 dans lequel le gabarit (34) définit un ensemble de rainures en spirale (37) adaptées à recevoir et à supporter les pales (10) au cours de la fabrication de la structure de rotor.

7. Procédé selon la revendication 5 dans lequel les disques (9), les pales (10) et le tambour (2) sont faits de mince matériau de plastique renforcé de verre.

## Patentansprüche

1. Tauchtropfkörper zur Behandlung von Ablaufwasser aus Abwasser, mit einem halb schwimmfähigen Rotoraufbau (1), der auf einer Welle (3) befestigt ist, die eine Anzahl von koaxial befestigten Scheiben (9) trägt, von denen jede dazwischen eine Reihe von eng beabstandeten spiralförmigen Flügeln (10), die als Biomasse-Wachstumssubstrat verfügbar sind, aufnimmt, dadurch gekennzeichnet, daß der Rotoraufbau von einer Trommel (2) umgeben ist, die Einrichtungen (13) enthält, die das Einfließen des zu behandelnden Ablaufwassers zur Verteilung zwischen angrenzenden Zwischenlagen am Außenumfang der Scheiben (9) aus Einlaßöffnungen (7) für das Ablaufwasser ermöglichen, die durch Löcher an einer Stirnfläche der Trommel gebildet sind, die am Umfang der Trommel entlang so angebracht sind, daß während der Drehung der Trommel die spiralförmigen Flügel eine Nutzhebung des zu behandelnden Ablaufwassers aus einem ersten Ablaufwassertank ermöglichen, in dem die Trommel über Kanäle (12) im axialen Bereich des die angrenzenden Zwischenlagen verbindenden Rotoraufbaus teilweise eintauchbar ist, die zu einer Auslaßöffnung (8) in der zweiten Stirnfläche der Trommel führen und in einen angrenzenden Tank münden, von dem aus das behandelte Ablaufwasser durch Schwerkraftwirkung erneut durch den ersten Ablaufwassertank in Umlauf gebracht werden kann.

2. Tauchtropfkörper nach Anspruch 1, in dem die äußere gekrümmte Oberfläche der Trommel mit Einrichtungen versehen ist, um das zu behandelnde Ablaufwasser zu belüften.

3. Tauchtropfkörper nach Anspruch 2, in dem die Belüftungseinrichtungen an der Außenfläche eine Reihe von am Ende geöffneten, quer oder diagonal verlaufenden Riffelungen (5 oder 5a) umfassen.

4. Tauchtropfkörper nach einem der Ansprüche 1 bis 3, in dem der als Biomasse-Wachstumssubstrat verfügbare Bereich der Oberfläche als 100Lm² definiert ist, wobei L gleich der Flügellänge in Metern ist.

5. Verfahren zur Herstellung eines Tauchtropfkörpers nach einem der Ansprüche 1 bis 4, mit einem Rotoraufbau aus dünnem flexiblem flächigem Material, worin Streifen dieses Materials hochkant auf einer die Auflage bildenden Lehre (34) angeordnet werden, so daß sie ein spiralförmiges Muster von einzelnen, aus einem zentralen Nabenbereich (38) ragenden Flügeln (10) ergeben, die dann an einer kreisrunde Scheibe (9) aus demselben Material befestigt werden, wobei die Lehre (34) mit den Flügeln (10) gegen die Scheibe (9) mit einer Beschichtung aus härtbarem Klebstoff dazwischen eingespannt wird, der eingespannte Aufbau in einer Einspannvorrichtung (30) gehalten und, wenn erforderlich, gedreht wird, um sicherzustellen, daß die Flügel nach oben gerichtet sind, aber die Lehre im wesentlichen horizontal gehalten wird, der fertiggestellte Flügel- und Scheibenaufbau von der Einspannvorrichtung gelöst wird, wenn der Klebstoff völlig gehärtet ist, mehrere Flügel- und Scheibenaufbauten auf ähnliche Weise mit härtbarem Klebstoff aufeinandergelegt werden und der so gebildete Schichtaufbau in einer Trommel auf einer Rotorwelle befestigt wird.

6. Verfahren nach Anspruch 5, in dem die Lehre (34) ein Muster von spiralförmigen Nuten (37) aufweist, das dazu geeignet ist, die Flügel (10) während der Herstellung des Rotoraufbaus aufzunehmen und zu tragen.

7. Verfahren nach Anspruch 5, bei dem die Scheiben (9), Flügel (10) und Trommel (2) aus dünnem glasverstärktem Kunststoffmaterial gefertigt werden.

FIG.1

FIG.2

FIG. 3

FIG. 4

*FIG.5*

FIG.6

FIG. 7